(19) **Europäisches Patentamt European Patent Office Office européen des brevets**

(11) **EP 4 266 743 A1**

(12) **EUROPEAN PATENT APPLICATION**
published in accordance with Art. 153(4) EPC

(43) Date of publication:
**25.10.2023 Bulletin 2023/43**

(21) Application number: **21921835.1**

(22) Date of filing: **29.01.2021**

(51) International Patent Classification (IPC):
**H04W 28/24** (2009.01)

(52) Cooperative Patent Classification (CPC):
**H04W 28/24**

(86) International application number:
**PCT/CN2021/074300**

(87) International publication number:
**WO 2022/160227 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **WU, Kedi**
**Shenzhen, Guangdong 518129 (CN)**

• **MA, Zhibin**
**Shenzhen, Guangdong 518129 (CN)**
• **WU, Jian**
**Shenzhen, Guangdong 518129 (CN)**
• **DOU, Shengyue**
**Shenzhen, Guangdong 518129 (CN)**
• **WEI, Yuejun**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **RESOURCE SCHEDULING METHOD AND APPARATUS**

(57) Embodiments of this application provide a resource scheduling method and apparatus. The method includes: receiving a first coded frame; determining a remaining delay budget of the first coded frame based on an actual time point at which the first coded frame arrives at a first network element; determining a scheduling priority based on the remaining delay budget; and scheduling, for the first coded frame based on the scheduling priority, a transmission resource for transmitting the first coded frame. When the scheduling priority is less than or equal to a preset priority threshold, the transmission resource is preferentially scheduled for the first coded frame. When the scheduling priority is greater than the preset priority threshold, a delay of the first coded frame is increased. In this way, resources can be flexibly scheduled for a coded frame that arrives at the first network element in advance and a coded frame that is delayed to arrive at the first network element, to alleviate phenomena such as frame freezing, lagging, and frame skipping caused by network jitter in a coded stream transmission process, reduce poor experience such as image tearing and flicker, and help improve user interaction experience.

FIG. 4

## Description

## TECHNICAL FIELD

This application relates to the communication field, and more specifically, to a resource scheduling method and apparatus.

## BACKGROUND

With the development of communication technologies, real-time multimedia services represented by cloud extended reality (cloud extended reality, Cloud XR), cloud gaming (cloud gaming), and the like also develop rapidly. After being encoded by a cloud server, multimedia service data such as a video may be transmitted to a terminal device through multi-hop, and then be decoded and played.

However, during actual transmission, network jitter is common. In severe cases, the jitter may exceed 20 ms (ms). When the jitter exists, the terminal device may not be able to play the video at a preset frame rate, and phenomena such as frame freezing, lagging, and frame skipping may occur during playback. This may result in poor experience such as image tearing and flicker, and user interaction experience deteriorates.

## SUMMARY

Embodiments of this application provide a resource scheduling method and apparatus, to alleviate phenomena such as frame freezing, lagging, and frame skipping caused by network jitter in a coded stream transmission process, and reduce poor experience such as image tearing and flicker.

According to a first aspect, a resource scheduling method is provided. The method may be performed by a first network element, or may be performed by a component (for example, a chip or a chip system) configured in a first network element. This is not limited in embodiments of this application.

For example, the method includes: The first network element receives a first coded frame; the first network element determines a remaining delay budget of the first coded frame based on an actual time point at which the first coded frame arrives at the first network element; and the first network element schedules a transmission resource for the first coded frame based on the remaining delay budget.

The remaining delay budget of the first coded frame in the first network element is determined based on the actual time point at which the first coded frame arrives at the first network element. In other words, the remaining delay budget is dynamically updated in real time based on an actual transmission status of a current frame, and then a resource is scheduled for the current frame based on the remaining delay budget. For example, when the remaining delay budget is relatively small, the resource may be preferentially scheduled; or when the remaining delay budget is relatively large, sending may be delayed. In this way, the first network element may flexibly schedule the transmission resource for the first coded frame based on the dynamic remaining delay budget. The resource can be preferentially scheduled for a coded frame that is delayed to arrive, to alleviate phenomena such as frame freezing, lagging, and frame skipping caused by network jitter, and reduce poor experience such as image tearing and flicker. In addition, the resource can be preferentially allocated to an emergency service based on transmission requirements of other services. In general, the resource is flexibly configured, which helps improve resource utilization.

With reference to the first aspect, in some possible implementations of the first aspect, the scheduling a transmission resource for the first coded frame based on the remaining delay budget includes: The first network element determines a scheduling priority based on the remaining delay budget; and the first network element schedules the transmission resource for the first coded frame based on the scheduling priority, where a smaller remaining delay budget indicates a higher scheduling priority of the transmission resource. In a possible design, the scheduling priority may be indicated by using a priority value, and a smaller priority value indicates a higher scheduling priority. Optionally, the priority value is inversely proportional to the remaining delay budget.

Therefore, a plurality of different scheduling priorities may be allocated for a plurality of different remaining delay budgets, and transmission resources are scheduled based on the plurality of different scheduling priorities, so that the resources can be flexibly configured to a greater extent. This helps improve resource utilization.

In embodiments of this application, two possible implementations are provided, to determine the remaining delay budget of the first coded frame. The following separately describes the two implementations.

In a first possible implementation, the first network element may determine the remaining delay budget of the first coded frame based on a time interval between the actual time point at which the first coded frame arrives at the first network element and an expected time point, and a maximum delay budget allocated to the first network element. That is, the remaining delay budget is the time interval between the actual time point at which the first coded frame arrives at the first network element and the expected time point.

The expected time point is an expected latest time point at which the first network element sends the first coded frame, or an expected latest time point at which the first coded frame is transmitted to a second network element, or an expected latest time point at which decoding of the first coded frame is completed at the second network element.

The foregoing expected latest time point is an acceptable latest time point.

The expected time point is the expected latest time point at which the first network element sends the first coded frame, indicating that the expected time point is the acceptable latest time point at which the first network element sends the first coded frame. In other words, the first coded frame should not be sent later than the expected time point at the latest.

The expected time point is the expected latest time point at which the first coded frame is transmitted from the first network element to the second network element, indicating that the expected time point is the acceptable latest time point at which the first coded frame is transmitted from the first network element to the second network element. In other words, the first coded frame should not arrive at the second network element later than the expected time point at the latest.

The expected time point is the expected latest time point at which decoding of the first coded frame is completed at the second network element, indicating that the expected time point is the acceptable latest time point at which decoding of the first coded frame is completed at the second network element. In other words, decoding of the first coded frame should not be completed at the second network element later than the expected time point at the latest. For example, for a multimedia service, a possible representation form in which decoding of the first coded frame is completed is that the first coded frame can be played. The expected time point may be a latest time point at which the first coded frame of the multimedia service is played at the second network element.

In embodiments of this application, the remaining delay budget is determined based on the actual time point at which the first coded frame arrives at the first network element and the expected time point, so that the resource can be scheduled for the first coded frame based on the remaining delay budget. In this way, an actual time point at which the first coded frame is sent from the first network element is not later than the expected latest sending time point, or an actual time point at which the first coded frame is transmitted to the second network element is not later than an expected latest arrival time point, or an actual time point at which decoding of the first coded frame is completed at the second network element is not later than the expected latest time point at which decoding is completed.

With reference to the first aspect, in some possible implementations of the first aspect, the first network element determines the expected time point based on actual arrival time points of a plurality of coded frames that arrive at the first network element within a first time period, an ideal time point at which the first coded frame arrives at the first network element, the maximum delay budget allocated to the first network element, and a predefined frame loss rate threshold, where an end time point of the first time period is the actual time point at which the first coded frame arrives at the first network element, and duration of the first time period is a predefined value; the ideal time point at which the first coded frame arrives at the first network element is obtained by learning network jitter of a transmission link between an encoder side of the first coded frame and the first network element; and the maximum delay budget is determined based on end-to-end round trip time (round trip time, RTT) of the first coded frame.

Because the network jitter is unstable, the ideal time point at which the first coded frame arrives at the first network element can be predicted more accurately by learning the network jitter. In addition, as time progresses, subsequent coded frames may be sequentially processed as the first coded frame, to determine ideal time points at which the coded frames arrive at the first network element. That is, an ideal time point at which a coded frame arrives at the first network element may also be updated in real time.

In addition, it should be noted that end-to-end RTT of a coded stream is associated with end-to-end RTT of each coded frame in the coded stream. In a transmission process, end-to-end RTT of a plurality of coded frames in the coded stream may be equal to the end-to-end RTT of the coded stream.

It should be understood that the actual time point at which the first coded frame arrives at the first network element may be included in the first time period, or may not be included in the first time period. In other words, the plurality of coded frames that arrive at the first network element within the first time period may include the first coded frame, or may not include the first coded frame. This is not limited in embodiments of this application.

It should be further understood that the plurality of coded frames (assuming that the first coded frame is not included) within the first time period and the first coded frame may belong to a same coded stream, or may belong to different associated coded streams (for example, an elementary stream and an enhanced stream). This is not limited in embodiments of this application.

Further, that the first network element determines the expected time point based on actual arrival time points of a plurality of coded frames that arrive at the first network element within a first time period, an ideal time point at which the first coded frame arrives at the first network element, the maximum delay budget allocated to the first network element, and a predefined frame loss rate threshold includes: The first network element determines, based on the actual arrival time points of the plurality of coded frames that arrive at the first network element within the first time period and the frame loss rate threshold, a candidate expected time point at which the first coded frame arrives at the first network element; and the first network element determines the expected time point based on the candidate expected time point, the ideal time point at which the first coded frame arrives at the first network element, and the maximum delay budget.

Still further, that the first network element determines, based on the actual arrival time points of the plurality of coded frames that arrive at the first network element within the first time period and the frame loss rate threshold, a candidate expected time point at which the first coded frame arrives at the first network element includes: The first network element learns the network jitter of the transmission link between the encoder side and the first network element based on the actual arrival time points of the plurality of coded frames that arrive at the first network element within the first time period; the first network element predicts, based on the network jitter, the ideal time point at which the first coded frame arrives at the first network element; the first network element determines delay distribution, where the delay distribution indicates an offset of an actual time point at which each coded frame in the plurality of coded frames arrives at the first network element relative to the ideal time point, and a quantity of frames corresponding to different offsets; and the first network element determines, based on the delay distribution and the frame loss rate threshold, the candidate expected time point at which the first coded frame arrives at the first network element, where a ratio of a quantity of frames corresponding to, in the delay distribution, an offset of the candidate expected time point relative to the ideal time point at which the first coded frame arrives at the first network element is less than 1 - φ, φ is the frame loss rate threshold, and 0<cp<1.

The ratio may be specifically a ratio of the quantity of frames corresponding to, in the delay distribution, the offset of the candidate expected time point relative to the ideal time point at which the first coded frame arrives at the first network element to a total quantity of frames in the delay distribution.

To ensure normal playing of the coded stream, the expected time point is determined, so that the predefined frame loss rate threshold can be met during transmission of the coded frames, for example, the ratio is less than (or less than or equal to) the frame loss rate threshold, so that the coded stream can be played normally.

The maximum delay budget further needs to be considered during determining of the expected time point. Therefore, for ease of differentiation, the expected time point determined based on the actual time points at which the plurality of coded frames arrive at the first network element within the first time period and the frame loss rate threshold is denoted as the candidate expected time point.

Still further, that the first network element determines the expected time point based on the candidate expected time point, the ideal time point at which the first coded frame arrives at the first network element, and the maximum delay budget includes: The first network element determines the expected time point of the first coded frame based on the maximum delay budget when a time interval between the ideal time point at which the first coded frame arrives at the first network element and the candidate expected time point is greater than or equal to the maximum delay budget, so that a time interval between the expected time point of the first encoded frame and the ideal time point at which the first coded frame arrives at the first network element is the maximum delay budget; or the first network element determines the candidate expected time point as the expected time point when a time interval between the ideal time point at which the first coded frame arrives at the first network element and the candidate expected time point is less than the maximum delay budget.

To prevent excessively large end-to-end RTT of the coded stream, the time interval between the expected time point and the ideal time point at which the first coded frame arrives at the first network element should not be less than the maximum delay budget allocated to the first network element.

Therefore, during determining of the expected time point, both the candidate expected time point obtained based on a network jitter factor and the maximum remaining delay budget are considered. Based on both the candidate expected time point and the maximum remaining delay budget, stable transmission of the coded frame is implemented, and user experience is improved.

With reference to the first aspect, in some possible implementations of the first aspect, the network jitter of the transmission link between the first network elements is obtained through learning by using a linear regression method or a Kalman filtering method and based on the actual arrival time points of the plurality of coded frames that arrive at the first network element within the first time period.

Because the network jitter is unstable, the first network element may perform learning based on the actual time points at which the plurality of coded frames that arrive at the first network element before the first coded frame arrive at the first network element, to simulate real network jitter, and then the ideal time point at which the first coded frame arrives at the first network element can be relatively accurately predicted.

It should be understood that the linear regression method and the Kalman filtering method are merely examples, and shall not constitute any limitation on this application. Learning on the network jitter may alternatively be implemented by using another algorithm. This application includes but is not limited thereto.

With reference to the first aspect, in some possible implementations of the first aspect, the first network element determines an expected time point of a second coded frame based on the expected time point of the first coded frame and a frame rate of the coded stream, where the second coded frame is a frame next to the first coded frame.

For a coded stream, each frame of the coded stream may serve as a first coded frame, to determine an expected time point according to the method provided in embodiments of this application, and then to determine a remaining delay budget; or some frames of the coded stream may serve as first coded frames, and expected time points are determined for the remaining frames based on a frame rate of a coded stream, to determine a remaining delay budget. In a second possible implementation, the remaining delay budget is determined based on end-to-end RTT of the first coded frame, instruction processing time of an application layer device, processing time of an encoder side, an actual time point at which the first coded frame is sent from the encoder side, the actual time point at which the first coded frame arrives at the first network element, and processing time of a decoder side.

In this implementation, another network element used to transmit the coded stream needs to participate. For example, the encoder side may carry a time point for sending each coded frame in a data packet, so that the first network element determines an expected delay budget of each coded frame.

With reference to the first aspect, in some possible implementations of the first aspect, the scheduling the transmission resource for the first coded frame based on the scheduling priority includes: The first network element preferentially schedules the transmission resource for the first coded frame when the scheduling priority is less than or equal to (or less than) a preset priority threshold, where a quantity of physical resource blocks (physical resource blocks, PRBs) in the scheduled transmission resource is greater than or equal to a quantity of PRBs required for transmission of the first coded frame.

With reference to the first aspect, in some possible implementations of the first aspect, the scheduling the transmission resource for the first coded frame based on the scheduling priority includes: The first network element preferentially increases a delay of the first coded frame when the scheduling priority is greater than (or greater than or equal to) a preset priority threshold.

Therefore, if the first coded frame is delayed to arrive, a corresponding remaining delay budget is relatively small, and a transmission resource scheduling priority is relatively high. In this case, plenty of physical resources may be preferentially allocated, so that the first coded frame is transmitted within the remaining delay budget. If the first coded frame arrives in advance, a corresponding remaining delay budget is relatively large, and a transmission resource scheduling priority is relatively low. In this case, a delay may be increased, and a resource does not need to be urgently scheduled for the first coded frame, so that the resource may be used for another emergency service. Therefore, resources can be flexibly configured, and resource utilization can be improved.

It should be understood that the foregoing relationship between the scheduling priority and the priority threshold is described based on the following assumptions: A smaller priority value indicates a higher priority; and a larger priority value indicates a lower priority. However, this shall not constitute any limitation on this application. A person skilled in the art may understand that a larger priority value indicates a higher priority, and a smaller priority value indicates a lower priority. In this case, the foregoing relationship between the scheduling priority and the priority threshold may be accordingly changed, and these changes should also fall within the protection scope of this application.

Optionally, the transmission resource is an air interface resource, the first network element is an access network device, and the second network element is a terminal device.

Optionally, the transmission resource is a route resource, the first network element is a core network device, and the second network element is an access network device.

According to a second aspect, a resource scheduling apparatus is provided. The apparatus is configured to perform the method according to the first aspect and any possible implementation of the first aspect.

According to a third aspect, a resource scheduling apparatus is provided. The apparatus includes a processor. The processor is coupled to a memory, and may be configured to execute a computer program in the memory, to implement the method according to any possible implementation of the foregoing aspects. Optionally, the apparatus further includes the memory. Optionally, the apparatus further includes a communication interface, and the processor is coupled to the communication interface.

The resource scheduling apparatus may correspond to the first network element in the first aspect.

If the first network element is an access network device, in an implementation, the apparatus is the access network device, and the communication interface may be a transceiver or an input/output interface; and in another implementation, the apparatus is a chip configured in the access network device, and the communication interface may be an input/output interface.

If the first network element is a core network device, in an implementation, the apparatus is the core network device; and in another implementation, the apparatus is a chip configured in the core network device. The communication interface may be an input/output interface.

Optionally, the transceiver may be a transceiver circuit. Optionally, the input/output interface may be an input/output circuit.

According to a fourth aspect, a computer-readable storage medium is provided. The computer-readable storage medium is configured to store a computer program. When the computer program is executed by a computer or a processor, the method according to the first aspect and any possible implementation of the first aspect is implemented.

According to a fifth aspect, a computer program product is provided. The computer program product includes instructions. When the instructions are executed, a computer is enabled to perform the method according to the first aspect and any possible implementation of the first aspect.

According to a sixth aspect, a system-on-chip or a system chip is provided. The system-on-chip or the system chip may be used in an electronic device. The system-on-chip or the system chip includes at least one communication interface, at least one processor, and at least one memory. The communication interface, the memory, and the processor are interconnected through a bus. The processor executes instructions stored in the memory, so that the terminal device may perform the method according to the first aspect and any possible implementation of the first aspect.

According to a seventh aspect, a communication system is provided. The communication system includes the foregoing first network element and the foregoing second network element.

It should be understood that the technical solutions in the second aspect to the sixth aspect of embodiments of this application correspond to the technical solution in the first aspect of embodiments of this application, and beneficial effects achieved in the aspects and feasible implementations corresponding to the aspects are similar. Details are not described again.

**BRIEF DESCRIPTION OF DRAWINGS**

FIG. 1 is a schematic diagram of an example of a network architecture according to an embodiment of this application;

FIG. 2 is a schematic diagram of transmission of a coded stream in an ideal state according to an embodiment of this application;

FIG. 3 is a schematic diagram of transmission of a coded stream when network jitter exists according to an embodiment of this application;

FIG. 4 is a schematic flowchart of a resource scheduling method according to an embodiment of this application;

FIG. 5 is a schematic diagram of a first time period according to an embodiment of this application;

FIG. 6 is a schematic diagram of a curve of a linear function simulated based on actual time points at which a plurality of coded frames arrive at a first network element according to an embodiment of this application;

FIG. 7 and FIG. 8 are schematic diagrams of a process of determining an expected time point of a first coded frame according to an embodiment of this application;

FIG. 9 is a schematic diagram of an expected time point of each coded frame that is obtained by separately performing a resource scheduling method once for each coded frame to determine a remaining delay budget according to an embodiment of this application;

FIG. 10 is a schematic diagram of expected time points that are of a plurality of coded frames after a first coded frame and that are determined based on a frame rate f according to an embodiment of this application; and

FIG. 11 and FIG. 12 are schematic block diagrams of a resource scheduling apparatus according to an embodiment of this application.

**DESCRIPTION OF EMBODIMENTS**

The following describes technical solutions of this application with reference to accompanying drawings.

A resource scheduling method provided in this application may be applied to various communication systems, such as a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future fifth generation (5th Generation, 5G) mobile communication system, or a new radio access technology (new radio access technology, NR). The 5G mobile communication system may include a non-standalone (non-standalone, NSA) communication system and/or a standalone (standalone, SA) communication system.

In embodiments of this application, an access network device may be any device having a wireless transceiver function. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband Unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, may be one antenna panel or a group (including a plurality of antenna panels) of antenna panels of a base station in a 5G system, or may be a network node, such as a baseband unit (BBU) or a distributed unit (distributed unit, DU), that constitutes a gNB or a transmission point.

A terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for users, for example, a handheld device or a vehicle-mounted device that has a wireless connection function. Currently, some examples of a terminal may be: a mobile phone (mobile phone), a tablet computer (pad), a computer (for example, a notebook computer or a palmtop computer) having a wireless transceiver function, a mobile Internet device (mobile Internet device, MID), a virtual reality (virtual reality, VR) device, an augmented reality (augmented reality, AR) device, a cloud virtual reality (cloud virtual reality, Cloud VR) device, a cloud augmented reality (cloud augmented reality, Cloud AR) device, a cloud XR device, a cloud game device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile network (public land mobile network, PLMN), and the like.

A core network device may include, but is not limited to, an access and mobility management network element (access and mobility management function, AMF), a session management network element (session management function, SMF), a user plane network element (user plane function, UPF), and the like.

The AMF is mainly configured for mobility management, access management, and the like, for example, user location update, user registration with a network, and user handover. The AMF may be further configured to implement functions other than session management in a mobility management entity (mobility management entity, MME), for example, a lawful interception function or an access authorization (or authentication) function.

The SMF is mainly configured for session management, UE Internet protocol (Internet Protocol, IP) address allocation and management, selection and control of a user plane function, termination of interfaces towards policy control and charging functions, downlink data notification, and the like. In embodiments of this application, the SMF is mainly responsible for session management in a mobile network, for example, session establishment, modification, and release. Specific functions may include, for example, allocation of an IP address to the terminal device, and selection of a UPF that provides a packet forwarding function.

The UPF is a data plane gateway, configured for routing and forwarding, quality of service (quality of service, QoS) handling for user plane data, or the like. User data may be accessed to a data network (data network, DN) through this network element. In embodiments of this application, the UPF may be configured to forward, to a cloud server, instructions received from the access network device, and forward, to the access network device, coded streams received from the cloud server.

In addition, for ease of understanding, terms used in the following are briefly described.

1. Video: The video is formed by playing a series of images in a specified time sequence. In short, the video may include a picture sequence.

2. Video encoding and video decoding: Video encoding usually refers to processing a picture sequence consisting of a video. Video encoding is performed by a source side. For example, in embodiments of this application, video encoding is performed by a cloud server. Video encoding usually includes processing (for example, compressing) original video pictures to reduce an amount of data required for representing the video pictures, for more efficient storage and/or transmission. Video encoding may be referred to as encoding for short.

Video decoding is performed by a destination side. For example, in embodiments of this application, video decoding is performed by a terminal device. Video decoding generally includes inverse processing relative to video encoding to reconstruct the video pictures.

3. Coded stream: The coded stream can be obtained by coding a picture sequence. In the field of video encoding and video decoding.

4. Coded frame: A frame (frame) is a basic element of a stream. In the field of video encoding and video decoding, the terms "picture (picture)", "frame (frame)", or "image (image)" may be used as synonyms.

The coded frame is a basic element of a coded stream. For example, the coded stream may include a plurality of coded frames. The plurality of coded frames may be carried in an Internet protocol (Internet protocol, IP) data packet, and may be transmitted in a form of an IP data packet.

5. Frame rate: For a video, the frame rate is a quantity of frames played per second. For example, the frame rate is 60 frames per second (frame per second, fps), indicating that 60 frames are played per second.

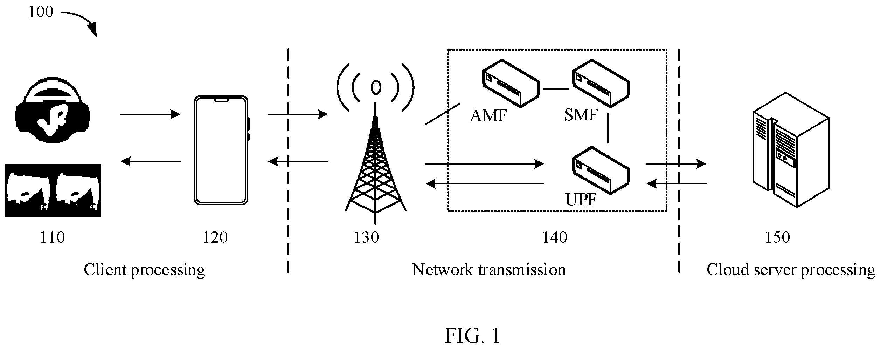

For ease of understanding of embodiments of this application, a network architecture applicable to the method provided in embodiments of this application is first briefly described. FIG. 1 is a schematic diagram of a network architecture applicable to a resource scheduling method according to an embodiment of this application. As shown in FIG. 1, a network architecture 100 may include an application layer device 110, a terminal device 120, an access network device 130, a core network device 140, and a cloud server 150.

The application layer device 110 may be, for example, an application layer device like a helmet or a handle of the foregoing cloud VR device, cloud AR device, cloud XR device, or cloud game device. The application layer device 110 may collect a user operation, for example, a handle operation and voice control, and generate an action instruction based on the user operation. The action instruction may be transmitted to the cloud server 150 through a network. The cloud server 150 may be configured to provide services such as logical operation, rendering, and encoding. In this embodiment of this application, the cloud server 150 may be configured to process and render an action instruction, and may be configured to perform encoding, to generate a coded stream. The coded stream may be transmitted to the application layer device 110 through a network.

For example, the application layer device 110 may be connected to the terminal device 120 like a mobile phone or a tablet. The terminal device 120 may be connected to the access network device 130 through an air interface, and then the core network device 140 accesses the Internet, and finally communicates with the cloud server 150. In other words, the coded stream may sequentially pass through the core network device 140, the access network device 130, and the terminal device 120, and finally arrive at the application layer device 110. Optionally, the terminal device 120 may be further configured to decode the coded stream, and may present a decoded video to a user.

It should be understood that the architecture shown in FIG. 1 is merely an example, and shall not constitute any limitation on this application. For example, in some other possible designs, the application layer device 110 and the terminal device 120 may be integrated. This is not limited in this application.

A real-time multimedia service requires low delay, high reliability, and high bandwidth to provide better user experience. For example, the XR requires that a delay from a human body movement to refreshing of a display screen, namely, an MTP latency (motion to photon latency), is less than or equal to 20 ms, to avoid a glare feeling.

Based on the network architecture shown in FIG. 1, the real-time multimedia service undergoes several phases: client processing, network transmission, and cloud server processing. A delay budget may be allocated for each phase. If each link can be controlled within a delay budget allocated to each link, low-delay ideal transmission of "encoding a frame, transmitting a frame, and playing a frame" can be implemented, and ideal stable transmission can be implemented.

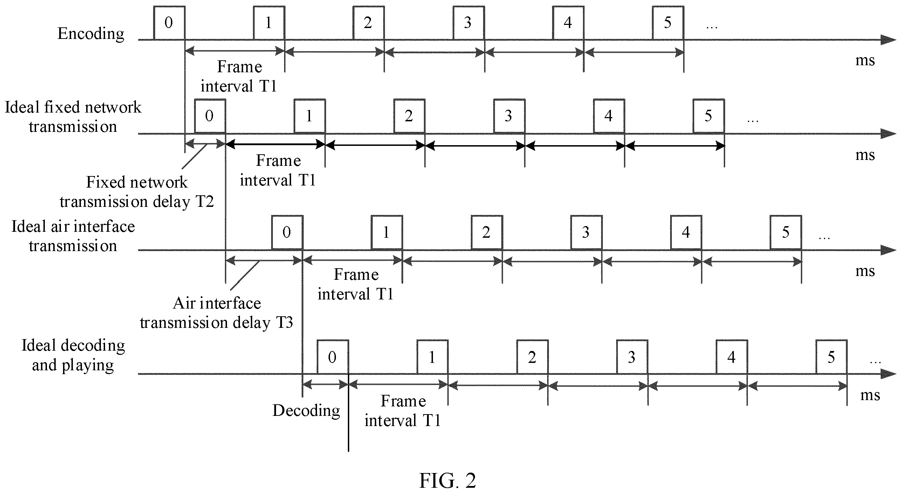

FIG. 2 shows a schematic diagram of transmission of a coded stream in an ideal state. The coded stream shown in FIG. 2 implements ideal stable transmission in a manner of "encoding a frame, transmitting a frame, and playing a frame". As shown in FIG. 2, each small block in the figure may indicate a coded frame, or each small block may indicate an IP data packet for carrying a coded frame.

FIG. 2 shows a diagram of a time sequence of six coded frames 0 to 5 that are sequentially encoded, transmitted in a fixed network, transmitted through an air interface, decoded, and played.

The encoding may be processed on a cloud server. A stable frame interval T1 exists between six processed coded frames, and the frame interval T1 may be inversely proportional to a frame rate of the coded stream. For example, for a coded stream whose frame rate is 60 fps, the frame interval T1 may be 16.67 ms.

The coded frame arrives at an access network device through fixed network transmission. During ideal fixed network transmission, without considering factors such as network transmission jitter, there are also stable frame intervals, which are also T1, between time points at which the six coded frames arrive at the access network device. An interval between a time point at which each frame is sent from the cloud server and a time point at which the frame arrives at the access network device is a fixed network transmission delay T2. It can be learned that during ideal fixed network transmission, the fixed network transmission latencies of the six coded frames are also the same.

The coded frame is transmitted from the access network device to the terminal device. During ideal air interface transmission, without considering factors such as network transmission jitter, there are also stable frame intervals, which are also T1, between time points at which the six coded frames arrive at the access network device. An interval between a time point at which each frame is sent from the access network device and a time point at which each frame arrives at the terminal device is an air interface transmission delay T3. It can be learned that during ideal air interface transmission, the air interface transmission latencies of the six coded frames are also the same.

Then, the terminal device decodes and plays the received coded frame. Because the transmission latencies of the six coded frames are stable, and the frame intervals are also stable, the six decoded frames can be decoded and played stably on the terminal device.

In conclusion, it can be learned that for the real-time multimedia service, end-to-end round trip time (round-trip time, RTT) may include: time consumed for an action instruction, time consumed for processing on a cloud server, time consumed for fixed network transmission, time consumed for air interface transmission, and time consumed for decoding. For example, time consumed for collecting an action instruction and uploading the action instruction to a cloud is recorded as $T_{act}$, time consumed for processing such as rendering and encoding on the cloud server is recorded as $T_{clo}$, the time consumed for fixed network transmission is recorded as $T_{fn}$, the time consumed for air interface transmission is recorded as $T_{nr}$, and time consumed for processing such as decoding and playing on a terminal is recorded as $T_{ter}$. Therefore, the RTT may be expressed by using the following formula: $RTT = T_{act} + T_{clo} + T_{fn} + T_{nr} + T_{ter}$.

It should be understood that for ease of understanding, FIG. 2 merely shows a diagram of a time sequence of six coded frames of "encoding a frame, transmitting a frame, and playing a frame" in an ideal state. However, this shall not constitute any limitation on this application. A quantity of coded frames, a bit rate, and the like included in the coded stream are not limited in this application.

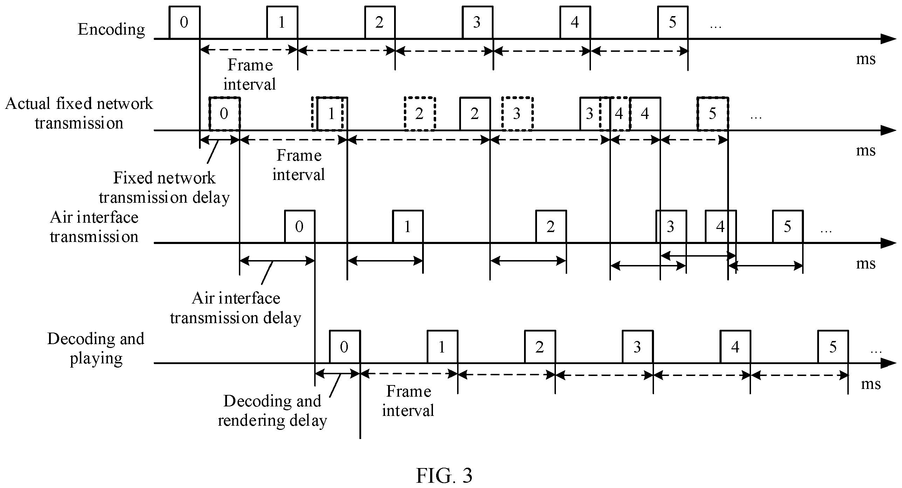

However, during actual transmission, network jitter is common. When the jitter exists, the terminal device may not be able to play a video at a preset constant frame rate. FIG. 3 shows a schematic diagram of transmission of a coded stream when network jitter exists. As shown in FIG. 3, because delay jitter may exist during actual fixed network transmission, some coded frames may arrive in advance, and some coded frames may be delayed to arrive. For ease of understanding, in FIG. 3, a dashed line block indicates an arrival time point of each frame during ideal fixed network transmission, and a solid line block indicates an arrival time point of each frame during actual fixed network transmission. It can be learned that coded frames numbered 2, 3, and 4 all are delayed to arrive, and even arrive after an ideal play time point. Therefore, phenomena such as frame freezing, lagging, and frame skipping may occur. This may result in poor experience such as image tearing and flicker, and user interaction experience deteriorates.

It should be understood that FIG. 3 merely shows an example of a situation in which a coded frame is delayed to arrive due to network jitter in a fixed network transmission process. Actually, network jitter may commonly occur in a coded stream transmission process, resulting in poor experience such as image tearing and flicker. User interaction experience deteriorates.

In view of this, this application provides a resource scheduling method. A remaining delay budget of a coded frame in a first network element is determined based on an actual time point at which the coded frame arrives at the first network element, and a resource is scheduled for the coded frame based on the remaining delay budget. Therefore, the remaining delay budget may be updated in real time based on an actual transmission status of each coded frame, and a transmission resource is flexibly scheduled based on the remaining delay budget. In this way, resources can be flexibly scheduled for a coded frame that arrives at the first network element in advance and a coded frame that is delayed to arrive at the first network element, to alleviate phenomena such as frame freezing, lagging, and frame skipping caused by network jitter in a coded stream transmission process, reduce poor experience such as image tearing and flicker, and help improve user interaction experience.

The following describes the resource scheduling method according to embodiments of this application in detail with reference to the accompanying drawings.

It should be understood that, for ease of understanding and description, the following describes embodiments by using the first network element as an execution body. However, this shall not constitute any limitation on this application. Provided that a device can perform the method provided in embodiments of this application by running code or a program that records the method provided in embodiments of this application, the device can serve as the execution body of the method. For example, the first network element may alternatively be replaced with a component configured in the first network element, for example, a chip, a chip system, or another functional module that can invoke and execute a program.

It should be further understood that, the first network element may be a network element through which the coded stream passes in a process of transmitting the coded stream from a cloud server to a terminal device. The coded stream may be transmitted from the first network element to a second network element. For example, in the network architecture shown in FIG. 1, the first network element may be, for example, an access network device, and the second network element may be, for example, a terminal device. Alternatively, the first network element may be, for example, a core network device, and the second network element may be, for example, an access network device.

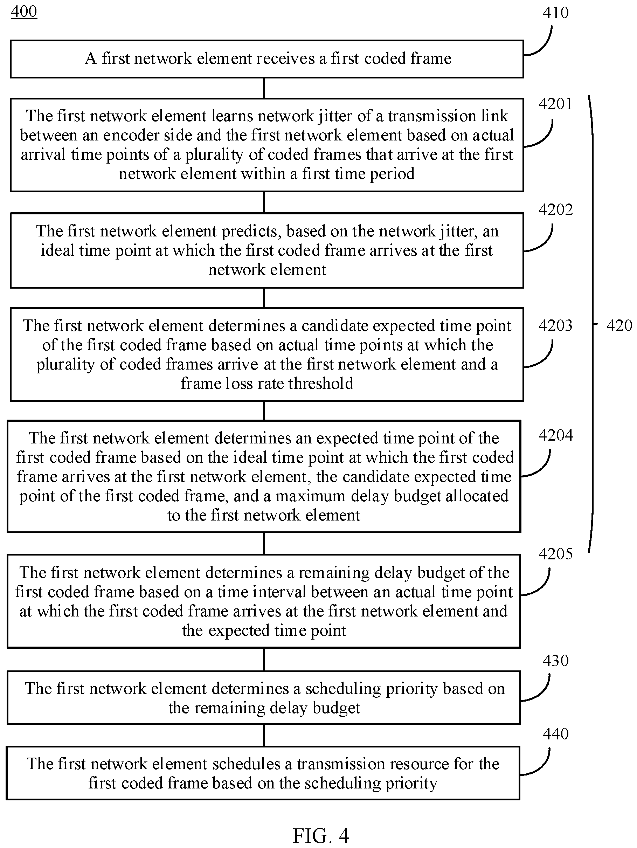

FIG. 4 is a schematic flowchart of a resource scheduling method according to this application. As shown in FIG. 4, the method 400 may include step 410 to step 440. The following describes the steps in FIG. 4 in detail.

In step 410, a first network element receives a first coded frame.

It can be learned from the foregoing descriptions of FIG. 1 and FIG. 2 that a cloud server may generate a coded stream after performing processing such as rendering and encoding on a video stream. The coded stream may include a plurality of coded frames. Each coded frame may arrive at a terminal device through Internet transmission or operator network transmission (including fixed network transmission and air interface transmission), and then the terminal device decodes and plays the coded frame.

In an example, the first network element may be an access network device. The access network device may receive the first coded frame from a core network device such as a UPF, and may send the received first coded frame to the terminal device by using an air interface resource.

In another example, the first network element may be a core network device. The core network device may receive the first coded frame from the Internet, and may send the received first coded frame to an access network device by using a route resource.

In step 420, the first network element determines a remaining delay budget of the first coded frame according to an actual time point at which the first coded frame arrives at the first network element.

Because the remaining delay budget of the first coded frame is determined based on the actual time point at which the first coded frame arrives at the first network element, the remaining delay budget may be determined based on an actual transmission status of the first coded frame. In other words, for one coded stream, remaining delay budgets of a plurality of coded frames included in the coded stream may dynamically change. Therefore, the remaining delay budget may also be referred to as a dynamic delay budget.

In this embodiment of this application, the first network element may determine a delay budget of the first coded frame based on the following two possible implementations.

In a first possible implementation, the first network element may determine the remaining delay budget of the first coded frame based on a time interval between the actual time point at which the first coded frame arrives at the first network element and an expected time point, and a maximum delay budget allocated to the first network element. In other words, in this implementation, the first network element may determine the remaining delay budget of the first coded frame without collaboration of another network element. In a second possible implementation, the first network element may determine the remaining delay budget based on end-to-end RTT of the coded stream, instruction processing time of an application layer device, processing time of an encoder side, an actual time point at which the first coded frame is sent from the encoder side, the actual time point at which the first coded frame arrives at the first network element, and processing time of a decoder side. In other words, in this implementation, the first network element may determine the remaining delay budget of the first coded frame with collaboration of another network element.

The following describes the two possible implementations in detail.

In the first possible implementation, the expected time point of the first coded frame may be specifically an expected latest time point at which the first network element sends the first coded frame, or an expected latest time point at which the first coded frame is transmitted to a second network element, or an expected latest time point at which decoding of the first coded frame is completed at a second network element.

The maximum delay budget allocated to the first network element is determined based on the end-to-end RTT of the first coded frame. Based on different definitions of the expected time point, the maximum delay budget allocated to the first network element may also be defined differently. As described above, the RTT may be expressed by using the following formula: RTT = $T_{act}$ + $T_{clo}$ + $T_{fn}$ + $T_{nr}$ + $T_{ter}$.

For example, the first network element is the access network device, and the maximum delay budget allocated to the first network element may be specifically a maximum delay budget allocated to the access network device. It is assumed that a time point at which the first network element receives the first coded frame is recorded as $t_{rec}$, a time point at which the first network element sends the first coded frame is recorded as $t_{sen}$, and air

interface transmission period in which the first coded frame is transmitted from the first network element to the second network element is $t_{tra}$. In this case, time $T_{nr}$ consumed for air interface transmission should satisfy: $T_{nr}$ = $t_{tra}$ + $t_{sen}$ - tree.

If the expected time point of the first coded frame is the expected latest time point at which the first network element sends the first coded frame, a value of the maximum delay budget (for example, namely, $T_{maxd}$) may be a maximum value of a difference between the time point $t_{sen}$ at which the first network element sends the first coded frame and the time point $t_{rec}$ at which the first network element receives the first coded frame. It is assumed that a time interval at which the first coded frame is sent from the first network element to the second network element is $t_{tra}$. The maximum value may be obtained by subtracting time $T_{act}$ consumed for collecting an instruction and uploading the instruction to a cloud, time $T_{clo}$ consumed for processing on a cloud server, time $T_{fn}$ consumed for fixed network transmission, the air interface transmission period $t_{tra}$, and time $T_{ter}$ consumed for processing on the terminal device from expected RTT (namely, predefined RTT, where the expected RTT is recorded as $RTT_{exp}$ to distinguish from actual RTT). That is, $T_{maxd}$ may be expressed by using the following formula:

$$T_{maxd} = RTT_{exp} - T_{act} - T_{clo} - T_{fn} - T_{ter} - t_{tra}.$$

If the expected time point of the first coded frame is the expected latest time point at which the first coded frame is transmitted to the second network element, a value of the maximum delay budget $T_{maxd}$ may be a maximum value of a difference between a time point at which the second network element receives the first coded frame and the time point at which the first network element receives the first coded frame, namely, a maximum value of the foregoing $T_{nr}$. The maximum value may be obtained by subtracting time $T_{act}$ consumed for collecting an instruction and uploading the instruction to a cloud, time $T_{clo}$ consumed for processing on a cloud server, time $T_{fn}$ consumed for fixed network transmission, and time $T_{ter}$ consumed for processing on the terminal device from the RTT. That is, $T_{maxd}$ may be expressed by using the following formula:

$$T_{maxd} = RTT_{exp} - T_{act} - T_{clo} - T_{fn} - T_{ter}.$$

If the expected time point of the first coded frame is the expected latest time point at which decoding of the first coded frame is completed at the second network element, a value of the maximum delay budget $T_{maxd}$ may be obtained by subtracting time $T_{act}$ consumed for collecting an instruction and uploading the instruction to a cloud, time $T_{clo}$ consumed for processing on a cloud server, and time $T_{fn}$ consumed for fixed network transmission from the RTT. That is, $T_{maxd}$ may be expressed by using the following formula:

$$T_{maxd} = RTT_{exp} - T_{act} - T_{clo} - T_{fn}$$

It should be understood that, for ease of understanding, the foregoing describes the maximum delay budget allocated to the first network element by using an example in which the access network device serves as the first network element. Based on the same concept, the maximum delay budget allocated to the first network element when another device serves as the first network element may also be determined. For brevity, examples are not listed one by one herein.

The following describes in detail a specific process of determining the remaining delay budget of the first coded frame.

For example, step 420 may specifically include the following steps.

Step 4201: The first network element learns network jitter of a transmission link between the encoder side and the first network element based on arrival time points of a plurality of coded frames that arrive at the first network element within a first time period.

Step 4202: The first network element predicts, based on the network jitter, an ideal time point at which the first coded frame arrives at the first network element.

Step 4203: The first network element determines a candidate expected time point of the first coded frame based on actual time points at which the plurality of coded frames arrive at the first network element and a frame loss rate threshold.

Step 4204: The first network element determines the expected time point of the first coded frame based on the ideal time point at which the first coded frame arrives at the first network element, the candidate expected time point of the first coded frame, and the maximum delay budget allocated to the first network element.

Step 4205: The first network element determines the remaining delay budget of the first coded frame based on a time interval between the actual time point at which the first coded frame arrives at the first network element and the expected time point.

Specifically, the expected time point of the first coded frame may be determined based on the ideal time point at which the first coded frame arrives at the first network element. Herein, the ideal time point at which the first coded frame arrives at the first network element may be determined based on actual arrival time points of a plurality of coded frames that arrive at the first network element within a time period before the first coded frame arrives at the first network element.

For ease of description, the time period before the first coded frame arrives at the first network element is referred to as a first time period. The first time period may be specifically a time period that goes backward by using the actual time point at which the first coded frame arrives at the first network element as a start point. In other words, an end time point of the first time period may be the actual time point at which the first coded frame arrives at the first network element. Duration of the first time period may be a predefined value. For example, the first time period may be 1 second (s), or may be 5s. Specific duration of the first time period is not limited in this application.

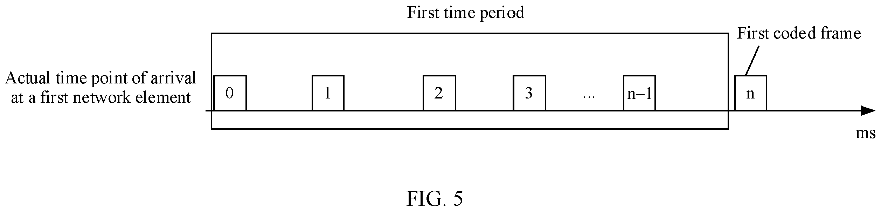

For ease of understanding, FIG. 5 shows an example of the first time period. FIG. 5 shows n coded frames numbered 0, 1, 2, and 3 to n-1 respectively. Assuming that the coded frame numbered n is the first coded frame, a period of time before an actual time point at which the coded frame n arrives at the first network element may be referred to as the first time period. Within the first time period, a plurality of coded frames arrive at the first network element. As shown in FIG. 5, the n coded frames numbered 0, 1, 2, and 3 to n-1 all arrive at the first network element within the first time period.

It should be understood that for ease of understanding, FIG. 5 merely shows an example of the first time period and the plurality of coded frames within the first time period. This application does not limit specific duration of the first time period and a quantity of coded frames that arrive at the first network element within the first time period. In addition, the first time period may further include the actual time point at which the first coded frame, namely, the coded frame numbered n in FIG. 5, arrives at the first network element. In this case, the plurality of coded frames that arrive at the first network element within the first time period may also include the first coded frame.

It should be further understood that the plurality of coded frames (assuming that the first coded frame is not included) within the first time period and the first coded frame may belong to a same coded stream, or may belong to different associated coded streams (for example, an elementary stream and an enhanced stream). This is not limited in embodiments of this application.

In step 4201, the first network element may learn the network jitter of the transmission link between the encoder side and the first network element based on the actual arrival time points of the plurality of coded frames that arrive at the first network element within the first time period.

Specifically, the first network element may predict, based on the actual arrival time points of the plurality of coded frames that arrive at the first network element within the first time period, the ideal time point at which the first coded frame arrives at the first network element by using a linear regression method or a Kalman filtering method.

The linear regression method is used as an example. The first network element may simulate a linear function based on the actual time points at which the plurality of coded frames arrive at the first network element within the first time period, where the linear function may indicate a linear relationship between coded frames and arrival time points. Based on the linear function, a time point at which a next coded frame (for example, the first coded frame) arrives at the first network element may be predicted.

A process of simulating the linear function based on the actual arrival times of the plurality of coded frames that arrive at the first network element within the first time period is a process of learning the network jitter of the transmission link between the encoder side and the first network element in the fixed network transmission process. Based on the learned network jitter, step 4202 may be performed to predict, based on the network jitter, the ideal time point at which the first coded frame arrives at the first network element. It should be understood that the ideal time point at which the first coded frame arrives at the first network element is a time predicted when real network jitter is learned. For ease of differentiation, a time point at which the first coded frame arrives at the first network element and that is predicted based on the learned network jitter is referred to as the ideal time point at which the first coded frame arrives at the first network element.

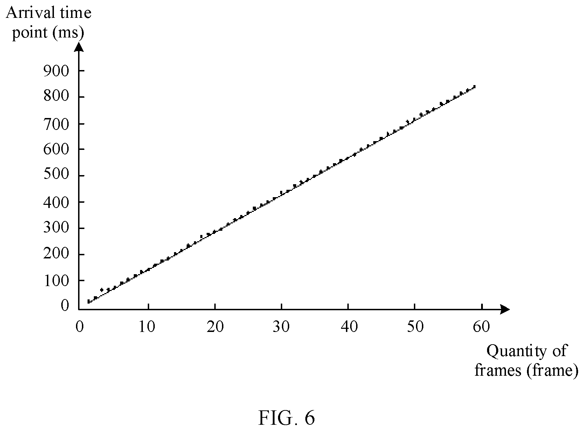

FIG. 6 shows a curve of a linear function simulated based on actual time points at which a plurality of coded frames arrive at a first network element. As shown in FIG. 6, a horizontal coordinate in FIG. 6 represents a quantity of coded frames that arrive at the first network element, and the unit may be frame; a vertical coordinate represents actual time points at which the coded frames arrive at the first network element, and the unit may be ms; and each discrete point may represent an actual time point at which one coded frame arrives at the first network element. For example, an arrival time point corresponding to the 1st coded frame that arrives at the first network element is used as a reference, and corresponds to the origin of coordinates. Therefore, time points at which the 2nd and 3rd coded frames to the last coded frame in the plurality of coded frames arrive at the first network element may be recorded respectively.

The curve of the linear function shown in the figure can be simulated by using the linear regression method. It can be learned that points corresponding to the plurality of coded frames are distributed near the curve.

Based on this curve, the first network element may predict an ideal time point at which the first coded frame arrives at the first network element.

It should be understood that the foregoing describes, with reference to FIG. 6 and by using the linear regression method as an example, a process of predicting the ideal time point at which the first coded frame arrives at the first network element. However, this shall not constitute any limitation on this application. For example, the first network element may alternatively predict, based on an algorithm like the Kalman filtering method, the ideal time point at which the first coded frame arrives at the first network element. For brevity, details are not described herein again.

It should be further understood that any coded frame that arrives at the first network element before the first coded frame may learn the network jitter based on the foregoing method, and an ideal time point at which any coded frame arrives at the first network element is predicted based on the network jitter. For brevity, description is not repeated herein.

In steps 4203 and 4204, the first network element determines the expected time point of the first coded frame.

The expected time point is determined, so that a predefined threshold like the foregoing frame loss rate threshold can be met during transmission of the coded frames, and then the coded stream can be played normally. In addition, a time interval between the expected time point and the ideal time point at which the first coded frame arrives at the first network element should not be less than the maximum delay budget allocated to the first network element.

To ensure normal playing of the coded stream, a frame loss rate threshold may be predefined. For example, the frame loss rate threshold is 1% or 0.1%. It may be understood that a lower frame loss rate indicates a higher proportion of coded frames that are successfully transmitted in the coded stream, and therefore, normal playback of the coded stream can be ensured greatly. It may also be understood that a smaller frame loss rate threshold indicates a higher requirement on the proportion of coded frames that are successfully transmitted, and a larger time interval between the corresponding expected time point and the ideal time point at which the first coded frame arrives at the first network element.

It should be understood that the actual time points at which the plurality of coded frames arrive at the first network element are also the actual arrive time points of the plurality of coded frames that arrive at the first network element within the first time period.

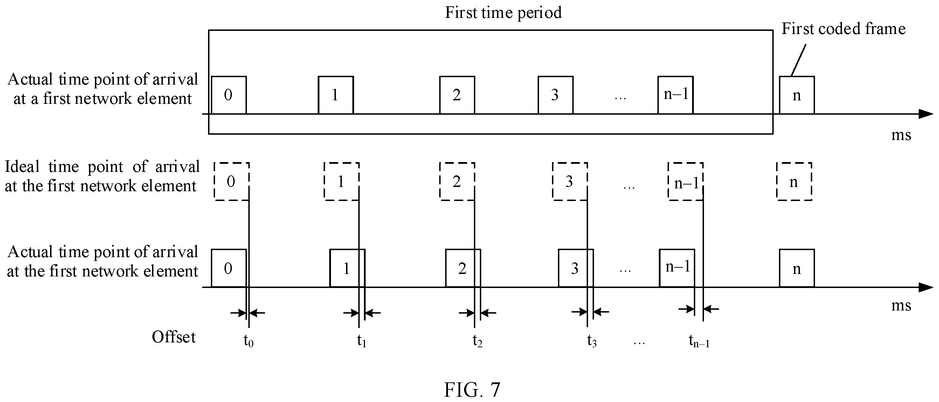

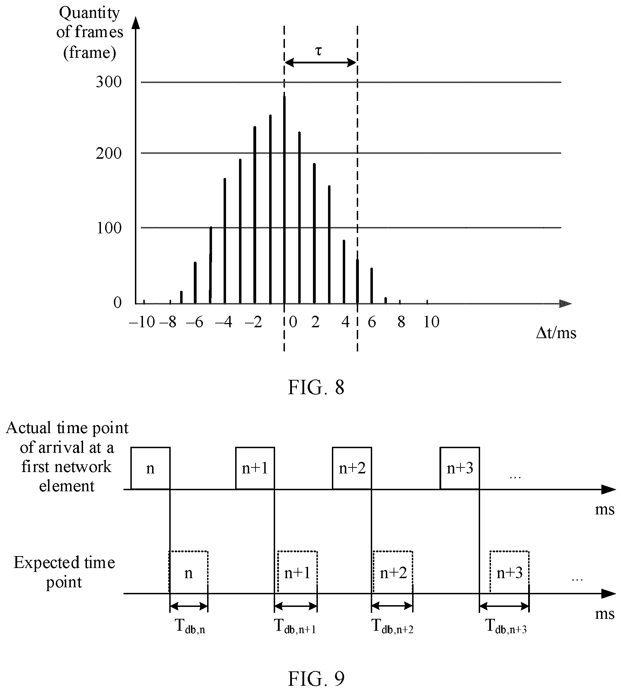

With reference to FIG. 7 and FIG. 8, the following describes in detail a process of determining the expected time point of the first coded frame.

First, the candidate expected time point of the first coded frame is determined based on delay distribution of the actual arrival time points of the plurality of coded frames that arrive at the first network element within the first time period and the predefined frame loss rate threshold. Because the time interval between the expected time point of the first coded frame that is determined based on the delay distribution and the frame loss rate threshold and the ideal time point is not necessarily less than the maximum delay budget allocated to the first network element, this determined expected time point is referred to as the candidate expected time point. To distinguish from a finally determined expected time point of the first coded frame, the expected time point of the first coded frame that is determined based on the delay distribution of the actual arrival time points of the plurality of coded frames that arrive at the first network element within the first time period and the predefined frame loss rate threshold is referred to as the candidate expected time point.

The delay distribution of the actual arrival time points of the plurality of coded frames that arrive at the first network element within the first time period may indicate an offset between an ideal time point and an actual time point at which each coded frame of the plurality of coded frames that arrive at the first network element within the first time period arrives at the first network element, and a quantity of coded frames corresponding to different offsets.

The ideal time point at which each coded frame arrives at the first network element may be determined based on actual arrival time points of a plurality of coded frames within a time period before the coded frame arrives. For a specific process, refer to the specific process of determining the ideal time point at which the first coded frame arrives at the first network element described above with reference to FIG. 6. For brevity, details are not described herein again.

FIG. 7 shows offsets between ideal time points and actual time points at which a plurality of coded frames that arrive at the first network element within the first time period arrive at the first network element. As shown in FIG. 7, ideal time points at which n coded frames within the first time period arrive at the first network element are shown in dashed line boxes in the figure, and actual time points at which the n coded frames within the first time period arrive at the first network element are shown in solid line boxes in the figure. An offset between an ideal time point and an actual time point at which each coded frame arrives at the first network element may be obtained by using an offset $\Delta t$ between boundaries (for example, right boundaries) of two blocks with the same number. As shown in figure, $t_0$, $t_1$, $t_2$, and $t_3$ to $t_{n-1}$ respectively represent offsets between ideal time points and actual time points at which n coded frames numbered 0, 1, 2, and 3 to n-1 arrive at the first network element.

As shown in FIG. 8, the delay distribution of the actual arrival time points of the plurality of coded frames that arrive at the first network element within the first time period can be obtained by counting a quantity of coded frames at each offset. In FIG. 8, a horizontal axis represents an offset $\Delta t$, and a vertical axis represents a quantity of coded frames corresponding to offsets $\Delta t$ with different values.

After the delay distribution of the actual arrival time points of the plurality of coded frames that arrive at the first network element within the first time period is determined, the candidate expected time point of the first coded frame may be determined based on the predefined frame loss rate threshold.

In the delay distribution diagram shown in FIG. 8, an offset (for example, recorded as $\tau$) is searched for by using an offset that is 0 as a reference, so that a ratio of a quantity of coded frames whose offsets are greater than $\tau$ is less than a preset frame loss rate threshold, that is, a ratio of a quantity of coded frames on the right side of the offset $\tau$ in the figure to a total quantity of coded frames in the delay distribution diagram is less than the preset frame loss rate threshold. If the frame loss rate threshold is recorded as $\varphi$, and $0<cp<1$, ratios of quantities of frames corresponding to the offsets $\tau$ and 0 in the delay distribution are less than 1 - $\varphi$, or in other words, a ratio of a quantity of frames corresponding to, in the delay distribution, an offset of the candidate expected time point at which the first coded frame arrives at the first network element relative to the ideal time point at which the first coded frame arrives at the first network element is less than 1 - $\varphi$.

Therefore, the candidate expected time point of the first coded frame may be obtained by adding the offset $\tau$ to the ideal time point at which the first coded frame arrives at the first network element. It may be understood that a time interval between the candidate expected time point of the first coded frame and the actual time point at which the first coded frame arrives at the first network element is $\tau$.

If the time interval $\tau$ is less than or equal to the maximum delay budget allocated to the first network element, the candidate expected time point may be determined as the expected time point of the first coded frame. If the time interval $\tau$ is greater than the maximum delay budget allocated to the first network element, the expected time point of the first coded frame may be determined based on the maximum delay budget. For example, a sum of the ideal time point at which the first coded frame arrives at the first network element and the maximum delay budget allocated to the first network element may be determined as the expected time point of the first coded frame, or a time interval between the expected time point of the first coded frame and the ideal time point at which the first coded frame arrives at the first network element is the maximum delay budget.

For ease of understanding, it is assumed that the maximum delay budget allocated to the first network element is recorded as $T_{maxd}$, and the ideal time point at which the first coded frame arrives at the first network element is recorded as $T_{iarr}$. In this case, the expected time point $T_{exp}$ of the first coded frame may be expressed as the formula: $T_{exp} = T_{iarr} + \min(i, T_{maxd})$. It should be understood that the foregoing descriptions with reference to FIG. 7 and FIG. 8 are merely examples for ease of understanding, and should not constitute any limitation on this application. In this application, an offset corresponding to each coded frame, a quantity of coded frames corresponding to offsets of different values, a relationship between the offset $\tau$ and the maximum delay budget allocated to the first network element, and the like are not limited.

In step 4205, the first network element determines the remaining delay budget based on the actual time point at which the first coded frame arrives at the first network element and the expected time point.

The remaining delay budget may be obtained by calculating the time interval between the actual time point at which the first coded frame arrives at the first network element and the expected time point. It is assumed that the actual time point at which the first coded frame arrives at the first network element is recorded as $T_{farr}$, and the remaining delay budget of the first coded frame that may be obtained by the first network element is recorded as $T_{db}$. In this case, the remaining delay budget $T_{db}$ of the first coded frame may be calculated by using the following formula: $T_{db} = T_{exp} - T_{farr}$.

It should be noted that, in this embodiment of this application, the first coded frame may be one of a plurality of coded frames in a same coded stream, or may be one of a plurality of coded frames in different associated coded streams. The different associated code streams may include an elementary stream and an enhanced stream. The elementary stream and the enhanced stream may be transmitted in parallel, or may be transmitted sequentially in a time sequence. This is not limited in this application.

The first network element may perform step 420 in the foregoing method for a plurality of consecutive coded frames to determine the remaining delay budget. In this case, each coded frame in the plurality of consecutive coded frames may be referred to as a first coded frame. In other words, the time point at which the first coded frame arrives at the first network element is a process of updating in real time according to an actual transmission situation, and the expected time point of the first coded frame is also a process of updating in real time according to the actual transmission situation. In this way, the determined remaining delay budget of the first coded frame is more consistent with a network status of actual transmission. FIG. 9 shows an expected time point of each coded frame that is obtained by separately performing step 4201 to step 4205 once for each coded frame to determine the remaining delay budget. The figure shows expected time points of a plurality of consecutive coded frames respectively numbered n, n + 1, n + 2, and n + 3, and remaining delay budgets that are determined based on the expected time points and actual time points of arrival at the first network element and that respectively correspond to $T_{db, n}$, $T_{db, n+1}$, $T_{db, n+2}$, and $T_{db, n+3}$ in the figure. It can be learned that an interval between expected time points of every two adjacent coded frames is different.

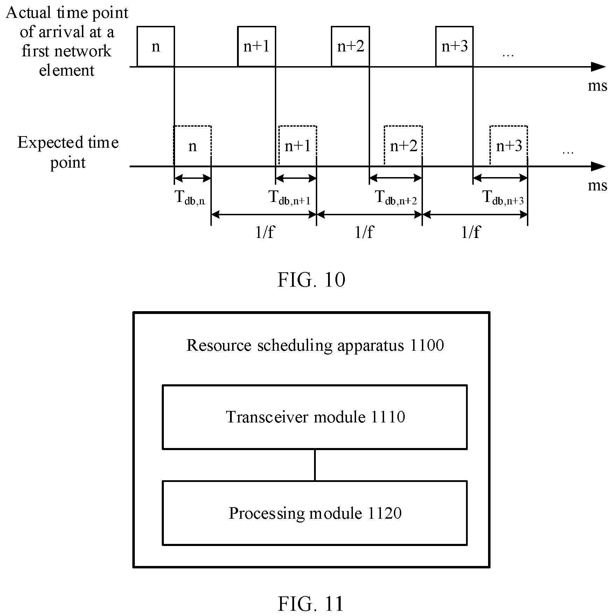

Alternatively, the first network element may use a coded frame of the plurality of consecutive coded frames as the first coded frame, and an expected time point of a coded frame after the first coded frame may be calculated based on a frame rate f. In this case, an interval between expected time points of two adjacent coded frames is 1/f. For example, an interval between an expected time point of a frame (for example, referred to as a second coded frame) next to the first coded frame and the expected time point of the first coded frame is 1/f, an interval between an expected time point of a frame next to the second coded frame and the expected time point of the second coded frame is also 1/f, and so on. Details are not listed herein. FIG. 10 shows expected time points that are of a plurality of coded frames after a first coded frame and that are determined based on the frame rate f. It can be learned that an interval between expected time points of every two adjacent coded frames is 1/f.

Alternatively, the first network element may determine a remaining delay budget by using N consecutive coded frames as a cycle, and using the first coded frame in each cycle as the first coded frame. An expected time point of another coded frame in the same cycle may be calculated based on a frame rate.

In the second possible implementation, the remaining delay budget may be determined based on end-to-end RTT of the first coded frame, the instruction processing time of an application layer device, the processing time of an encoder side, the actual time point at which the first coded frame is sent from the encoder side, the actual time point at which the first coded frame arrives at the first network element, and the processing time of the decoder side. The end-to-end RTT of the first coded frame may be the end-to-end RTT of the coded stream to which the first coded frame belongs.

The actual time point at which the first coded frame is sent from the encoder side is carried in a data packet for bearing the first coded frame. For example, each time the first coded frame passes through a network element, the network element that the first coded frame passes through may carry, in a data packet, a time point at which the coded frame is sent, for example, carry it in a packet header of the data packet in a form of a time stamp. In this way, when receiving the first coded frame, the first network element may obtain the actual time point at which the first coded frame is sent from the encoder side, to determine the remaining delay budget.

It can be learned from the foregoing related end-to-end RTT calculation formulas that the first network element may calculate the remaining delay budget $T_{db}$ according to the following formula: $T_{db} = RTT - T_{act} - T_{clo} - T_{ter} - (T_{send} - T_{rec})$. $T_{send}$ indicates a time point at which the first coded frame is sent from the cloud server, and $T_{rec}$ indicates a time point at which the first coded frame arrives at the first network element, or in other words, a time point at which the first network element receives the first coded frame. It should be understood that a receiving time point or a sending time point in this implementation is an actual time point.

In step 430, the first network element determines a scheduling priority based on the remaining delay budget.

The scheduling priority is a priority of a transmission resource used to schedule the first coded frame. When the first network element is an access network device, the transmission resource may be an air interface resource. The air interface resource may specifically include a time-frequency resource, a space domain resource, and the like.

When the first network element is a core network device, the transmission resource may be a route resource. The route resource may specifically include a router, a forwarding path, and the like.

A relationship between the remaining delay budget and the scheduling priority of the transmission resource may be as follows: A smaller remaining delay budget indicates a higher scheduling priority of the transmission resource. For example, if a priority value is used to indicate a scheduling priority, and a smaller priority value indicates a higher scheduling priority, the priority value is inversely proportional to the remaining delay budget. For example, a relationship between a priority value L and a remaining delay budget D may be expressed by: $L = \alpha/D$, where $\alpha$ is a coefficient, for example, may be a preconfigured value or a protocol-predefined value, and $\alpha$ is not 0.

In step 440, the first network element schedules the transmission resource for the first coded frame based on the scheduling priority.

When the scheduling priority is relatively high, the first network element may preferentially schedule the transmission resource for the first coded frame, so that the first coded frame can be sent in a relatively short time period. When the scheduling priority is relatively low, a delay of the first coded frame is increased, and the resource may be used for an emergency service.

For example, whether the scheduling priority is high or low may be determined based on a preset condition. For example, the preset condition may be that a priority value is less than or equal to a preset priority threshold. The foregoing priority value is still used as an example for description. A smaller priority value indicates a higher scheduling priority. If the priority value is less than or equal to the preset priority threshold, it indicates that the scheduling priority is relatively high; or if the priority value is greater than the preset priority threshold, it indicates that the scheduling priority is relatively low.

As described above, the first network element may be the access network device, and the transmission resource may be the air interface resource. When the scheduling priority is relatively high, the first network element serving as the access network device may preferentially schedule PRBs for the first coded frame, so that a quantity of PRBs scheduled for the first coded frame is greater than or equal to a quantity of PRBs required for transmitting the first coded frame.

The first network element may alternatively be the core network device, and the transmission resource may be the route resource. When the scheduling priority is relatively high, the first network element serving as the core network device may select a forwarding path with a relatively small transmission hop count for the first coded frame, and/or select a router with a relatively small queue length to forward the first coded frame. The foregoing queue length of the router may be understood as a quantity of data packets waiting to be transmitted by the router. A larger queue length indicates a larger quantity of data packets to be transmitted, and longer waiting time is required. A smaller queue length indicates a smaller quantity of data packets to be transmitted, and shorter waiting time is required.

In contrast, if the first network element is the access network device, when the scheduling priority is relatively high, the access network device serving as the first network element may increase the delay of the first coded frame within a range allowed by the remaining delay budget, and more resources are used for transmission of another emergency service. In this way, a time domain resource may be released, and a transmission requirement of another service is considered, so that the time domain resource is flexibly configured, and resource utilization is improved.

If the first network element is the core network device, when the scheduling priority is relatively low, the core network device serving as the first network element may select, within a range allowed by the remaining delay budget, a forwarding path with a relatively large transmission hop count, and/or select a router with a relatively large queue length to forward the first coded frame. In this way, a forwarding path with a relatively small transmission hop count and/or a router with a relatively small queue length may be used for transmission of another emergency service. In this way, a route resource may be released, and a transmission requirement of another service is considered, so that the route resource is flexibly configured, and resource utilization is improved.

It should be understood that the enumeration of the preset conditions and the enumeration of the priority thresholds herein are merely examples, and should not constitute any limitation on this application. For example, scheduling priorities may be further classified into more different levels based on priority values, and transmission resources are scheduled for the first coded frame based on different levels.

It should be further understood that the foregoing example of scheduling the transmission resource for the first coded frame based on the scheduling priority is merely an example for ease of understanding, and should not constitute any limitation on this application. For example, the first network element may alternatively schedule the transmission resource based on a proportional fairness scheduling (proportional fairness scheduling, PFS) algorithm, so that the scheduling priority is directly proportion to a ratio of a current instantaneous rate to a historical average rate, and is inversely proportional to the remaining delay budget. The first network element may schedule the transmission resource for the first coded frame based on an existing scheduling priority algorithm. For brevity, examples are not described one by one herein.

In another implementation, the first network element may directly schedule the transmission resource for the first coded frame based on the remaining delay budget of the first coded frame, without calculating the scheduling priority of the transmission resource. Based on a same concept as the foregoing, the first network element may preferentially schedule the transmission resource for the first coded frame when the remaining delay budget is greater than or equal to a preset threshold; or when the remaining delay budget is less than a preset threshold, a delay of the first coded frame is reduced. In this way, the transmission resource may also be flexibly scheduled for the first coded frame based on the dynamic remaining delay budget.

Based on the foregoing solution, the first network element determines the remaining delay budget of the first coded frame at the first network element based on the actual time point at which the first coded frame arrives, and may schedule the transmission resource for the first coded frame based on the dynamically calculated remaining delay budget. Therefore, when network jitter exists, the remaining delay budget may be updated in real time according to an actual transmission status of each coded frame, and the resource may be flexibly scheduled based on the remaining delay budget. For a coded frame that is delayed to arrive, phenomena such as frame freezing, lagging, and frame skipping caused by the network jitter are alleviated, and poor experience such as image tearing and flicker is reduced, and user interaction experience is improved. For a coded frame that arrives in advance, the delay can be reduced, the resource is preferentially allocated to an emergency service based on transmission requirements of other services. Overall, the first network element may flexibly configure the resource, so that resource configuration can exactly match the transmission requirement. This helps improve resource utilization.

In addition, based on the foregoing solution, the first network element does not need to introduce an additional buffer, to achieve a stable playing effect. Therefore, a delay of the entire coded stream is not increased. In other words, the end-to-end RTT does not increase significantly. Therefore, problems such as a black edge and a picture break may be avoided during view angle switching, and user interaction experience is improved.

It should be noted that the access network device and the core network device that are listed above are used as two examples of the first network element, and may separately perform the foregoing solution, or may simultaneously perform the foregoing solution. When the access network device and the core network device simultaneously perform the foregoing solution, a two-level dejittering effect can be achieved. In this way, phenomena such as frame freezing, lagging, and frame skipping caused by the network jitter can be reduced to a greater extent, which can reduce poor experience such as image tearing and flicker to a greater extent.

The foregoing describes in detail the method provided in embodiments of this application with reference to the plurality of accompanying drawings. However, it should be understood that these accompanying drawings and related descriptions of the corresponding embodiments are merely examples for ease of understanding, and should not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

To implement functions in the method provided in embodiments of this application, the first network element may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

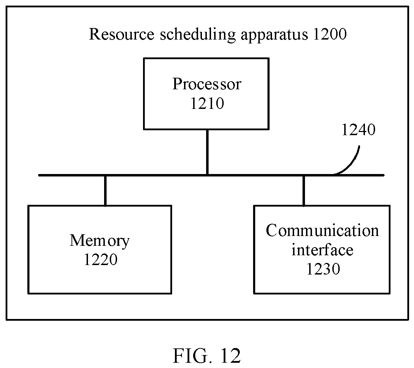

Apparatuses provided in embodiments of this application are described below in detail with reference to FIG. 11 and FIG. 12.

FIG. 11 is a schematic block diagram of a resource scheduling apparatus 1100 according to an embodiment of this application. It should be understood that the resource scheduling apparatus 1100 may correspond to the first network element in the method embodiments, and may be configured to perform each step and/or procedure that is performed by the first network element in the method embodiments.

As shown in FIG. 11, the resource scheduling apparatus 1100 may include a transceiver module 1110 and a processing module 1120. Specifically, when the apparatus 1100 is configured to perform the method performed by the first network element in FIG. 4, the transceiver module 1110 may be configured to perform step 410 in the foregoing method 400. The processing module 1120 may be configured to perform some or all of step 420, step 430, and step 440 in the method 400.

It should be understood that, in embodiments of this application, module division is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 12 is another schematic block diagram of a resource scheduling apparatus according to an embodiment of this application. As shown in FIG. 12, the resource scheduling apparatus 1200 includes at least one processor 1210, configured to implement the functions of the first network element in the method provided in embodiments of this application.

For example, if the resource scheduling apparatus 1200 corresponds to the first network element in the foregoing method embodiments, the processor 1210 may be configured to: determine a remaining delay budg-

et of a first coded frame; and schedule a transmission resource for the first coded frame based on the remaining delay budget of the first coded frame. For details, refer to detailed descriptions in the method examples. Details are not described herein again.

The resource scheduling apparatus 1200 may further include at least one memory 1220, configured to store program instructions and/or data. The memory 1220 is coupled to the processor 1210. The coupling in this embodiment of this application may be an indirect coupling or a communication connection between apparatuses, units, or modules in an electrical form, a mechanical form, or another form, and is used for information exchange between the apparatuses, the units, or the modules. The processor 1210 may perform a cooperative operation with the memory 1220. The processor 1210 may execute the program instructions stored in the memory 1220. At least one of the at least one memory may be included in the processor.

The resource scheduling apparatus 1200 may further include a communication interface 1230. The communication interface 1230 may be a transceiver, an interface, a bus, a circuit, or an apparatus that can implement a transceiver function. The communication interface 1230 is configured to communicate with another device via a transmission medium, so that an apparatus in the resource scheduling apparatus 1200 can communicate with the another device. For example, if the resource scheduling apparatus 1200 corresponds to the first network element in the foregoing method embodiments, the another device may be a second network element or a previous-hop network element of the first network element. The processor 1210 receives and transmits data through the communication interface 1230, and is configured to implement the method performed by the first network element in the embodiment corresponding to FIG. 4.

A specific connection medium between the processor 1210, the memory 1220, and the communication interface 1230 is not limited in this embodiment of this application. In this embodiment of this application, the memory 1220, the processor 1210, and the communication interface 830 are connected through a bus 1240 in FIG. 12. In FIG. 12, the bus is indicated by using a bold line. A manner of connection between other components is merely an example for description, and imposes no limitation. The bus may be classified into an address bus, a data bus, a control bus, and the like. For ease of representation, only one bold line is used to indicate the bus in FIG. 12, but this does not mean that there is only one bus or only one type of bus.

This application further provides a processing apparatus, including at least one processor. The at least one processor is configured to execute a computer program stored in a memory, so that the processing apparatus performs the method performed by the access network device or the core network device in the foregoing method embodiments.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

According to the methods provided in embodiments of this application, this application further provides a computer program product. The computer program product includes computer program code. When the computer program code is run on a computer, the computer is enabled to perform the method that is performed by the first network element in the embodiment shown in FIG. 4.

According to the methods provided in embodiments of this application, this application further provides a computer-readable storage medium. The computer-readable storage medium stores program code. When the program code is run on a computer, the computer is enabled to perform the method that is performed by the first network element in the embodiment shown in FIG. 4.

According to the methods provided in embodiments of this application, this application further provides a system. The system includes the foregoing cloud server, core network device, access network device, and terminal device. The core network device and/or the access network device may be configured to perform the method that is performed by the first network element in the foregoing method embodiments.

All or a part of the technical solutions provided in embodiments of this application may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1.  A resource scheduling method, comprising:

    receiving, by a first network element, a first coded frame;
    determining, by the first network element, a remaining delay budget of the first coded frame based on an actual time point at which the first coded frame arrives at the first network element; and
    scheduling, by the first network element, a transmission resource for the first coded frame based on the remaining delay budget.

2.  The method according to claim 1, wherein the scheduling a transmission resource for the first coded frame based on the remaining delay budget comprises:

    determining, by the first network element, a scheduling priority based on the remaining delay budget; and
    scheduling, by the first network element, the transmission resource for the first coded frame based on the scheduling priority, wherein a smaller remaining delay budget indicates a higher scheduling priority of the transmission resource.

3.  The method according to claim 1 or 2, wherein the remaining delay budget is a time interval between the actual time point at which the first coded frame arrives at the first network element and an expected time point; and the expected time point is an expected latest time point at which the first network element sends the first coded frame, or an expected latest time point at which the first coded frame is transmitted to a second network element, or an expected latest time point at which decoding of the first coded frame is completed at the second network element.

4.  The method according to claim 3, wherein the method further comprises:
    determining, by the first network element, the expected time point based on actual arrival time points of a plurality of coded frames that arrive at the first network element within a first time period, an ideal time point at which the first coded frame arrives at the first network element, a maximum delay budget allocated to the first network element, and a predefined frame loss rate threshold, wherein an end time point of the first time period is the actual time point at which the first coded frame arrives at the first network element, and duration of the first time period is a predefined value; the ideal time point at which the first coded frame arrives at the first network element is obtained by learning network jitter of a transmission link between an encoder side of the first coded frame and the first network element; and the maximum delay budget is determined based on end-to-end round trip time RTT of the first coded frame.

5.  The method according to claim 4, wherein the determining, by the first network element, the expected time point based on actual arrival time points of a plurality of coded frames that arrive at the first network element within a first time period, an ideal time point at which the first coded frame arrives at the first network element, a maximum delay budget allocated to the first network element, and a predefined frame loss rate threshold comprises:

    determining, by the first network element based on the actual arrival time points of the plurality of coded frames that arrive at the first network element within the first time period and the frame loss rate threshold, a candidate expected time point at which the first coded frame arrives at the first network element; and

determining, by the first network element, the expected time point based on the candidate expected time point, the ideal time point at which the first coded frame arrives at the first network element, and the maximum delay budget.

6. The method according to claim 5, wherein the determining, by the first network element based on the actual arrival time points of the plurality of coded frames that arrive at the first network element within the first time period and the frame loss rate threshold, a candidate expected time point at which the first coded frame arrives at the first network element comprises:

learning, by the first network element, the network jitter of the transmission link between the encoder side and the first network element based on the actual arrival time points of the plurality of coded frames that arrive at the first network element within the first time period;

predicting, by the first network element based on the network jitter, the ideal time point at which the first coded frame arrives at the first network element;

determining, by the first network element, delay distribution, wherein the delay distribution indicates an offset of an actual time point at which each coded frame in the plurality of coded frames arrives at the first network element relative to the ideal time point, and a quantity of frames corresponding to different offsets; and

determining, by the first network element based on the delay distribution and the frame loss rate threshold, the candidate expected time point at which the first coded frame arrives at the first network element, wherein a ratio of a quantity of frames corresponding to, in the delay distribution, an offset of the candidate expected time point relative to the ideal time point at which the first coded frame arrives at the first network element is less than $1 - \varphi$, $\varphi$ is the frame loss rate threshold, and $0 < \varphi < 1$.

7. The method according to claim 5 or 6, wherein the determining, by the first network element, the expected time point based on the candidate expected time point, the ideal time point at which the first coded frame arrives at the first network element, and the maximum delay budget comprises:

determining, by the first network element, the expected time point of the first coded frame based on the maximum delay budget when a time interval between the ideal time point at which the first coded frame arrives at the first network element and the candidate expected time point is greater than or equal to the maximum delay budget, so that a time interval between the expected time point and the ideal time point at which the first coded frame arrives at the first network element is the maximum delay budget; or

determining, by the first network element, the candidate expected time point as the expected time point when a time interval between the ideal time point at which the first coded frame arrives at the first network element and the candidate expected time point is less than the maximum delay budget.

8. The method according to any one of claims 4 to 7, wherein the network jitter of the transmission link between the encoder side and the first network element is obtained through learning by using a linear regression method or a Kalman filtering method and based on the actual arrival time points of the plurality of coded frames that arrive at the first network element within the first time period.

9. The method according to any one of claims 3 to 8, wherein the method further comprises:
determining, by the first network element, an expected time point of a second coded frame based on the expected time point of the first coded frame and a frame rate of a coded stream, wherein the second coded frame is a frame next to the first coded frame.

10. The method according to claim 1 or 2, wherein the remaining delay budget is determined based on end-to-end RTT of the first coded frame, instruction processing time of an application layer device, processing time of an encoder side, an actual time point at which the first coded frame is sent from the encoder side, the actual time point at which the first coded frame arrives at the first network element, and processing time of a decoder side.

11. The method according to claim 10, wherein the actual time point at which the first coded frame is sent from the encoder side is carried in a data packet for bearing the first coded frame.

12. The method according to any one of claims 2 to 11, wherein the scheduling the transmission resource for the first coded frame based on the scheduling priority comprises:
preferentially scheduling, by the first network element, the transmission resource for the first coded frame when the scheduling priority is less than or equal to a preset priority threshold, wherein a quantity of physical resource blocks PRBs in the scheduled transmission resource is greater than or equal to a quantity of PRBs required for transmission of the first coded frame.

13. The method according to any one of claims 2 to 11, wherein the scheduling the transmission resource for the first coded frame based on the scheduling priority comprises:
increasing, by the first network element, a delay of the first coded frame when the scheduling priority is greater than a preset priority threshold.

14. The method according to any one of claims 1 to 13, wherein the transmission resource is an air interface resource, the first network element is an access network device, and the second network element is a terminal device.

15. The method according to any one of claims 1 to 13, wherein the transmission resource is a route resource, the first network element is a core network device, and the second network element is an access network device.

16. A resource scheduling apparatus, comprising:

a transceiver module, configured to receive a first coded frame; and
a processing module, configured to: determine a remaining delay budget of the first coded frame based on an actual time point at which the first coded frame arrives at the apparatus; and schedule a transmission resource for the first coded frame based on the remaining delay budget.

17. The apparatus according to claim 16, wherein the processing module is specifically configured to:

determine a scheduling priority based on the remaining delay budget; and
schedule the transmission resource for the first coded frame based on the scheduling priority, wherein
a smaller remaining delay budget indicates a higher scheduling priority of the transmission resource.

18. The apparatus according to claim 16 or 17, wherein the remaining delay budget is a time interval between the actual time point at which the first coded frame arrives at the apparatus and an expected time point; and the expected time point is an expected latest time point at which the apparatus sends the first coded frame, or an expected latest time point at which the first coded frame is transmitted to a second network element, or an expected latest time point at which decoding of the first coded frame is completed at the second network element.

19. The apparatus according to claim 18, wherein the processing module is further configured to:
determine the expected time point based on actual arrival time points of a plurality of coded frames that arrive at the apparatus within a first time period, an ideal time point at which the first coded frame arrives at the apparatus, a maximum delay budget allocated to the apparatus, and a predefined frame loss rate threshold, wherein an end time point of the first time period is the actual time point at which the first coded frame arrives at the apparatus, and duration of the first time period is a predefined value; the ideal time point at which the first coded frame arrives at the apparatus is obtained by learning network jitter of a transmission link between an encoder side of the first coded frame and the apparatus; and the maximum delay budget is determined based on end-to-end round trip time RTT of the first coded frame.

20. The apparatus according to claim 19, wherein the processing module is specifically configured to:

determine, based on the actual arrival time points of the plurality of coded frames that arrive at the apparatus within the first time period and the frame loss rate threshold, a candidate expected time point at which the first coded frame arrives at the apparatus; and
determine, for the apparatus, the expected time point based on the candidate expected time point, the ideal time point at which the first coded frame arrives at the apparatus, and the maximum delay budget.

21. The apparatus according to claim 20, wherein the processing module is specifically configured to:

learn the network jitter of the transmission link between the encoder side and the apparatus based on the actual arrival time points of the plurality of coded frames that arrive at the apparatus within the first time period;
predict, based on the network jitter, the ideal time point at which the first coded frame arrives at the apparatus;
determine delay distribution, wherein the delay distribution indicates an offset of an actual time point at which each coded frame in the plurality of coded frames arrives at the apparatus relative to the ideal time point, and a quantity of frames corresponding to different offsets; and
determine, based on the delay distribution and the frame loss rate threshold, the candidate expected time point at which the first coded frame arrives at the apparatus, wherein a ratio of a quantity of frames corresponding to, in the delay distribution, an offset of the candidate expected time point relative to the ideal time point at which the first coded frame arrives at the apparatus is less than 1 - φ, φ is the frame loss rate threshold, and 0<cp<1.

22. The apparatus according to claim 20 or 21, wherein the processing module is further configured to:

  determine the expected time point of the first coded frame based on the maximum delay budget when a time interval between the ideal time point at which the first coded frame arrives at the apparatus and the candidate expected time point is greater than or equal to the maximum delay budget, so that a time interval between the expected time point of the first coded frame and the ideal time point at which the first coded frame arrives at the apparatus is the maximum delay budget; or
  determine the candidate expected time point as the expected time point when a time interval between the ideal time point at which the first coded frame arrives at the apparatus and the candidate expected time point is less than the maximum delay budget.

23. The apparatus according to any one of claims 19 to 22, wherein the network jitter of the transmission link between the encoder side and the apparatus is obtained through learning by using a linear regression method or a Kalman filtering method and based on the actual arrival time points of the plurality of coded frames that arrive at the apparatus within the first time period.

24. The apparatus according to any one of claims 18 to 23, wherein the processing module is further configured to:
  determine an expected time point of a second coded frame based on the expected time point of the first coded frame and a frame rate of a coded stream, wherein the second coded frame is a frame next to the first coded frame.

25. The apparatus according to claim 16 or 17, wherein the remaining delay budget is determined based on end-to-end RTT of the first coded frame, instruction processing time of an application layer device, processing time of an encoder side, an actual time point at which the first coded frame is sent from the encoder side, the actual time point at which the first coded frame arrives at the apparatus, and processing time of a decoder side.

26. The apparatus according to claim 25, wherein the actual time point at which the first coded frame is sent from the encoder is carried in a data packet for bearing the first coded frame.

27. The apparatus according to any one of claims 17 to 26, wherein the processing module is further configured to:
  preferentially schedule the transmission resource for the first coded frame when the scheduling priority is less than or equal to a preset priority threshold, wherein a quantity of physical resource blocks PRBs in the scheduled transmission resource is greater than or equal to a quantity of PRBs required for transmission of the first coded frame.

28. The apparatus according to any one of claims 17 to 26, wherein the processing module is further configured to:
  increase a delay of the first coded frame when the scheduling priority is greater than a preset priority threshold.

29. The apparatus according to any one of claims 16 to 28, wherein the transmission resource is an air interface resource, the apparatus is an access network device, and the second network element is a terminal device.

30. The apparatus according to any one of claims 16 to 28, wherein the transmission resource is a route resource, the apparatus is a core network device, and the second network element is an access network device.

31. A resource scheduling apparatus, comprising a processor and a memory, wherein

  the memory is configured to store program code; and
  the processor is configured to invoke the program code stored in the memory to perform the method according to any one of claims 1 to 15.

32. A computer-readable storage medium, wherein the computer-readable storage medium stores instructions, and when the instructions are run on a computer, the computer is enabled to perform the method according to any one of claims 1 to 15.

33. A computer program product, comprising program code, wherein when a computer runs the computer program, the program code performs the method according to any one of claims 1 to 15.

FIG. 1

FIG. 2

Encoding

| 0 | 1 | 2 | 3 | 4 | 5 | ...

ms

Frame
interval

Actual fixed network
transmission

| 0 | 1 | 2 | 2 | 3 | 3 | 4 | 4 | 5 | ...

ms

Fixed network
transmission delay

Frame
interval

Air interface
transmission

| 0 | 1 | 2 | 3 | 4 | 5 | ...

ms

Air interface
transmission delay

Decoding and
playing

| 0 | 1 | 2 | 3 | 4 | 5 | ...

ms

Decoding and
rendering delay

Frame
interval

FIG. 3

400

410

A first network element receives a first coded frame

4201

The first network element learns network jitter of a transmission link between an encoder side and the first network element based on actual arrival time points of a plurality of coded frames that arrive at the first network element within a first time period

4202

The first network element predicts, based on the network jitter, an ideal time point at which the first coded frame arrives at the first network element

4203

The first network element determines a candidate expected time point of the first coded frame based on actual time points at which the plurality of coded frames arrive at the first network element and a frame loss rate threshold

420

4204

The first network element determines an expected time point of the first coded frame based on the ideal time point at which the first coded frame arrives at the first network element, the candidate expected time point of the first coded frame, and a maximum delay budget allocated to the first network element

4205

The first network element determines a remaining delay budget of the first coded frame based on a time interval between an actual time point at which the first coded frame arrives at the first network element and the expected time point

430

The first network element determines a scheduling priority based on the remaining delay budget

440

The first network element schedules a transmission resource for the first coded frame based on the scheduling priority

FIG. 4

First time period

First coded frame

Actual time point of arrival
at a first network element

| 0 | 1 | 2 | 3 | ... | n−1 | n |

ms

FIG. 5

FIG. 6

EP 4 266 743 A1

First time period

First coded frame

Actual time point of arrival at a first network element

| 0 | | 1 | | 2 | | 3 | ... | n−1 | | n |

ms

Ideal time point of arrival at the first network element

| 0 | | 1 | | 2 | | 3 | ... | n−1 | | n |

Actual time point of arrival at the first network element

| 0 | | 1 | | 2 | | 3 | ... | n−1 | | n |

ms

Offset $t_0$ $t_1$ $t_2$ $t_3$ ... $t_{n-1}$

FIG. 7

FIG. 8

FIG. 9

FIG. 10

FIG. 11

Resource scheduling apparatus 1200

Processor
1210

1240

Memory
1220

Communication
interface
1230

FIG. 12

## INTERNATIONAL SEARCH REPORT

| International application No. |
| --- |
| **PCT/CN2021/074300** |

| A. | CLASSIFICATION OF SUBJECT MATTER |
| --- | --- |
| | H04W 28/24(2009.01)i |

According to International Patent Classification (IPC) or to both national classification and IPC

| B. | FIELDS SEARCHED |
| --- | --- |

Minimum documentation searched (classification system followed by classification symbols)

H04

Documentation searched other than minimum documentation to the extent that such documents are included in the fields searched

Electronic data base consulted during the international search (name of data base and, where practicable, search terms used)

VEN, CNKI, CNABS, CNTXT, USTXT, WOTXT, EPTXT, DWPI: 时间, 剩余时延, 到达, 资源调度, time, delay, arrival, resource

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105636123 A (QUALCOMM INC.) 01 June 2016 (2016-06-01) description, pages 3-8 | 1-33 |
| A | US 7190669 B2 (HEWLETT PACKARD DEVELOPMENT CO.) 13 March 2007 (2007-03-13) entire document | 1-33 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 October 2021** | **22 October 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/074300**

| Patent document cited in search report | | | Publication date (day/month/year) | Patent family member(s) | | | Publication date (day/month/year) |
|---|---|---|---|---|---|---|---|
| CN | 105636123 | A | 01 June 2016 | IL | 199824 | D0 | 15 April 2010 |
| | | | | ES | 2544584 | T3 | 01 September 2015 |
| | | | | AU | 2008210413 | B2 | 12 January 2012 |
| | | | | EP | 2111723 | A2 | 28 October 2009 |
| | | | | WO | 2008095042 | A3 | 15 January 2009 |
| | | | | WO | 2008095042 | A2 | 07 August 2008 |
| | | | | MX | 2009008072 | A | 18 August 2009 |
| | | | | KR | 20090115187 | A | 04 November 2009 |
| | | | | RU | 2437254 | C2 | 20 December 2011 |
| | | | | BR | PI0807851 | B1 | 03 March 2020 |
| | | | | EP | 2111723 | B1 | 27 May 2015 |
| | | | | CA | 2675577 | A1 | 07 August 2008 |
| | | | | KR | 101079994 | B1 | 04 November 2011 |
| | | | | US | 8743774 | B2 | 03 June 2014 |
| | | | | JP | 4988865 | B2 | 01 August 2012 |
| | | | | US | 2008186931 | A1 | 07 August 2008 |
| | | | | CN | 101595750 | A | 02 December 2009 |
| | | | | AU | 2008210413 | A1 | 07 August 2008 |
| | | | | TW | I479900 | B | 01 April 2015 |
| | | | | RU | 2009132471 | A | 10 March 2011 |
| | | | | CA | 2675577 | C | 24 November 2015 |
| | | | | CN | 105636123 | B | 01 June 2021 |
| | | | | TW | 200850025 | A | 16 December 2008 |
| | | | | JP | 2010517490 | A | 20 May 2010 |
| | | | | BR | PI0807851 | A2 | 27 May 2014 |
| US | 7190669 | B2 | 13 March 2007 | US | 2004008628 | A1 | 15 January 2004 |

Form PCT/ISA/210 (patent family annex) (January 2015)